# EUROPEAN PATENT APPLICATION

(11) **EP 4 470 848 A1**
(43) Date of publication of application: **04.12.2024**
(21) Application number: 22924096.5
(22) Date of filing: 29.11.2022
(51) Int. Cl.: B60R 21/2338, B60R 21/203

(54) **AIRBAG DEVICE FOR DRIVER'S SEAT**

(30) Priority: 27.01.2022 JP 2022011313; 17.10.2022 JP 2022166291
(71) Applicant: Autoliv Development AB, 44783 Vargarda (SE)
(72) Inventor: KOIZUMI, Akira, Yokohama-shi, Kanagawa 222-8580 (JP); ABE, Kazuhiro, Yokohama-shi, Kanagawa 222-8580 (JP); MIYAGI, Keitoku, Yokohama-shi, Kanagawa 222-8580 (JP); ISHIGAKI, Ryota, Yokohama-shi, Kanagawa 222-8580 (JP)
(74) Representative: Schön, Thilo
(86) International application number: PCT/JP2022/043963
(87) International publication number: WO 2023/145244

(57) **Abstract**

[Problem]

To provide a driver seat airbag device with a simple configuration and that enables suppressing injury value of the driver.

[Resolution Means]

An airbag cushion 108 of the airbag device 100 for a vehicle includes a rear panel 122 positioned on the steering wheel 106 side, a front panel 120 positioned on the driver 104 side for restraining the driver 166, and a side panel 124 that connects an edge of the rear panel 122 and an edge of the front panel 120 and constitutes a side part of the airbag cushion 108. The front panel 120 includes the circular panel 138 that is a circular shape and the fan-shaped panels 140 and 142 that are fan-shaped and the arc portion 146 is connected to the inner circumferential portion of the circular panel 138. The airbag cushion 108 further includes an internal tether 144 inside the airbag cushion 108 that pulls the fan-shaped panel 140 toward the rear panel 122.

## Description

### TECHNICAL FIELD

The present invention relates to a driver seat airbag device installed in a vehicle steering wheel.

### BACKGROUND ART

Currently, nearly all vehicle steering wheels are equipped with a driver seat airbag device. The airbag cushion of the driver seat airbag device is primarily stored in the central hub of the steering wheel and cleaves a resin cover, and the like by the expansion pressure so as to expand and deploy toward the front of a passenger.

More efficient restraint of an occupant is desired for the airbag cushion described above. The inventors of the present application focused on the fact that, based on body structure, rotation of a head of the occupant tends to cause strain on the body, and have developed an airbag cushion that enables efficient restraint while suppressing rotation of the head of the occupant.

For example, it has been found that in the case of an oblique collision that is a collision at an angle relative to the direction of travel, the occupant enters the airbag cushion at an angle and the head easily rotates. In light of the forgoing, the applicant of the present application has developed a technique of forming a recess part 114 using an internal tether 116 at the center of an airbag cushion 104 on the occupant side as disclosed in FIG. 2 of Patent Document 1, for example.

### RELATED ART DOCUMENTS

### PATENT DOCUMENTS

Patent Document 1: Japanese Unexamined Patent Application Publication 2020-37382

### SUMMARY OF THE INVENTION

### PROBLEM TO BE SOLVED BY THE INVENTION

With the technology of Patent Document 1, a center base material 118, three internal tethers 116, and similar components are used to form the recess part 114. Apart from this technology, a technology to form a concavity equivalent to the recess part 114 with an even more concise component configuration is currently under development.

In light of these problems, an object of the present invention is to provide a driver seat airbag device with a simple configuration that suppresses injury value of the driver.

### MEANS FOR SOLVING THE PROBLEM

In order to resolve the problem described above, the driver seat airbag device according to the present invention is a driver seat airbag device, comprising:
an inflator installed in a steering wheel of a vehicle; and
an airbag cushion stowed together with the inflator in the steering wheel that receives gas from the inflator to expand and deploy toward the driver; wherein
the airbag cushion includes:
   a rear panel positioned on the steering wheel side,
   a front panel positioned on the driver side for restraining the driver, and
   a side panel that connects an edge of the rear panel to an edge of the front panel and constitutes a side part of the airbag cushion;
   where the front panel includes:
      a circular panel in a circular shape, and
      one or a plurality of fan-shaped panels that are fan-shaped with an arc portion thereof connecting to an inner circumferential portion of the circular panel, and the airbag cushion further includes an internal tether inside the airbag cushion that pulls the fan-shaped panel toward the rear panel side.

With this configuration, the internal tether pulling on the fan-shaped panel enables efficiently forming the cone shaped recess part in the center of the front panel. With this recess part, rotation of the head can be suppressed compared to restraining the driver with a simple flat surface when the driver moves forward at an angle in an oblique collision. Therefore, with the above-described configuration, it is possible to restrain the driver and suppress injury value.

In addition, with the configuration described above, the recess part can be formed with a simple configuration using the fan-shaped panel and the internal tether. Therefore, with the configuration described above, the amount of materials used for the panels and the like is low enabling weight reduction and increase in material yield; thereby achieving low cost and further the airbag cushion can also be folded and stowed in a more compact manner.

For the one or plurality of fan-shaped panels described above, a plurality are provided, and straight portions of the plurality of fan-shaped panels are connected together.

A conical depressed recess part can be efficiently formed by using the one or plurality of fan-shaped panels described above.

The internal tethers described above may be connected at one end to the center angle of the one or plurality of fan-shaped panels.

With the configuration described above, the internal tether pulling on the center angle portion of the fan-shaped panel enables efficient forming of the cone shaped recess part.

The internal tether described above may be integrally formed with the fan-shaped panel.

The internal tether described above enables efficient pulling of the fan-shaped panel toward the rear panel.

The side panel described above may be a circular fan shape with a large arc on the front panel side.

Having the side panel form the side part of the airbag cushion as described above enables suppressing unnecessary swelling and achieving an airbag cushion with a shape where the diameter gradually broadens toward the driver.

The side panel described above may be a combination of the plurality of sub-panels.

The side part of the airbag cushion may be formed by connecting the plurality of sub-panels.

For the inner circumferential portion of the circular panel described above, the dimension in the vertical direction may be larger than the dimension in the horizontal direction.

With the configuration described above, a long vertical recess part can be formed in the center of the front panel. This manner of recess part enables restraint of drivers of various body sizes while suppressing rotation of the head.

The driver described above includes a large adult male and a small adult female, and the dimension of the inner circumferential portion in the vertical direction is at least larger than the distance from the head center of gravity of the large adult male seated in a normal orientation in the driver seat to the head center of gravity of the small adult female.

The long vertical recess part in the center of the front panel can be used to restrain the heads of various drivers with different body sizes, from the head of a large adult male to the head of a small adult female.

A portion of the inflator described above is inserted into the airbag cushion through the rear panel, and a prescribed gas discharge opening is formed in the portion, and the airbag cushion further includes a streamlining cloth connected to the rear panel and covering a portion of the inflator, and the streamlining cloth includes an opening part below a portion of the inflator.

The streamlining cloth described above allows gas supplied from the inflator to flow downward through the opening part, and thus the airbag cushion can expand from a lower portion side. Therefore, the airbag cushion can start to deploy at an early stage in a direction of the abdomen of the occupant, quickly enter between the steering wheel and the abdomen of the occupant, and start initially restraining from the abdomen.

### EFFECT OF THE INVENTION

With the present invention, a driver seat airbag device for the driver having a simple configuration and that suppresses injury value of the driver can be provided.

### BRIEF DESCRIPTION OF THE DRAWINGS

FIG. 1 is a diagram depicting the outline of a driver seat airbag device according to an embodiment of the present invention.
FIG. 2 is a perspective view of an airbag cushion when expanded and deployed in FIG. 1(b).
FIG. 3 is a diagram depicting each panel configuring an airbag cushion in FIG. 2(a).
FIG. 4 is a cross-sectional view of the airbag cushion in FIG. 1(b) along A-A.
FIG. 5 is a diagram depicting the process of the airbag cushion of FIG. 1(b) restraining the driver in an oblique collision.
FIG. 6 is a modified example of the rear panel and side panel depicted in FIG. 3.
FIG. 7 is a diagram illustrating a modified example of the airbag device in FIG. 1(b).
FIG. 8 is a diagram depicting the process of the airbag cushion of FIG. 7(a) restraining the driver in an oblique collision.
FIG. 9 is a diagram depicting a modified example of the airbag cushion internal structure of FIG. 7(b).

### DESCRIPTION OF THE PREFERRED EMBODIMENTS

Preferred embodiments according to the present invention will hereinafter be described in detail with reference to the attached drawings. Dimensions, materials, other specific numerical values, and the like indicated in the embodiments are merely examples for ease of understanding of the invention and do not limit the present invention unless otherwise noted. Note that in the present specification and drawings, elements having essentially identical functions and configurations are labeled with identical symbols in order to omit redundant descriptions along with an illustration of elements not directly related to the present invention.

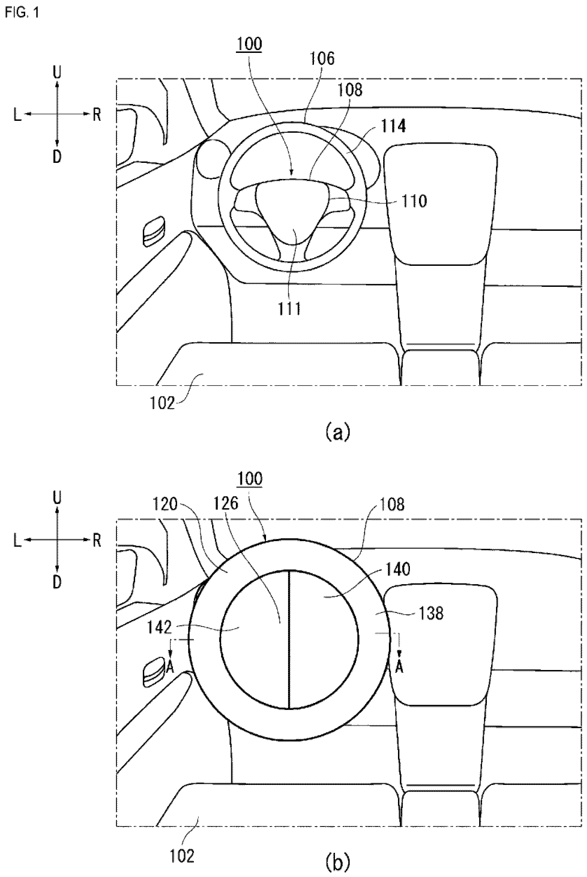

FIG. 1 is a diagram depicting an overview of a driver seat airbag device (hereinafter referred to as airbag device 100) according to an embodiment of the present invention. FIG. 1(a) is a diagram depicting a state of the airbag device 100 before activation. As depicted in FIG. 1(b), the vehicle airbag device 100 is implemented as a frontal airbag of a driver seat 102 on a front row left side in a left hand drive vehicle.

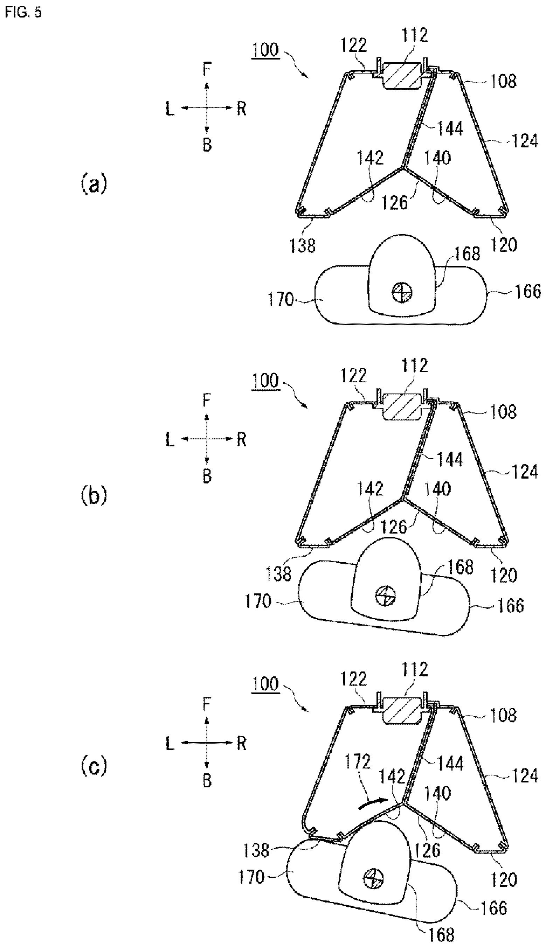

In the present embodiment, when a driver 166 (see FIG. 5(a)) is seated in a regular posture in the driver seat 102, the direction the driver 166 is facing is referred to as forward, the opposite direction is referred to as rearward, and the directions are referred to as the front-to-back direction when axes on coordinates are depicted. In addition, when the driver 166 is seated in the driver seat 102 in a regular posture, the right side of the driver 166 is referred to as the right direction, the left side of the driver 166 is referred to as the left direction, and the directions are referred to as the left-right direction when axes on coordinates are depicted. Furthermore, when the driver 166 is seated in a regular posture, the head direction of the driver 166 is referred to as up, the waist direction of the driver 166 is referred to as down, and the directions are referred to as the up-down direction when axes on coordinates are depicted.

In the drawings used in the description of embodiments of the present invention below, as necessary, the front, back, left, right, up, and down directions with reference to the driver 166 described above are indicated by arrows F (Forward), B (Back), L (Left), R (Right), U (up), and D (down).

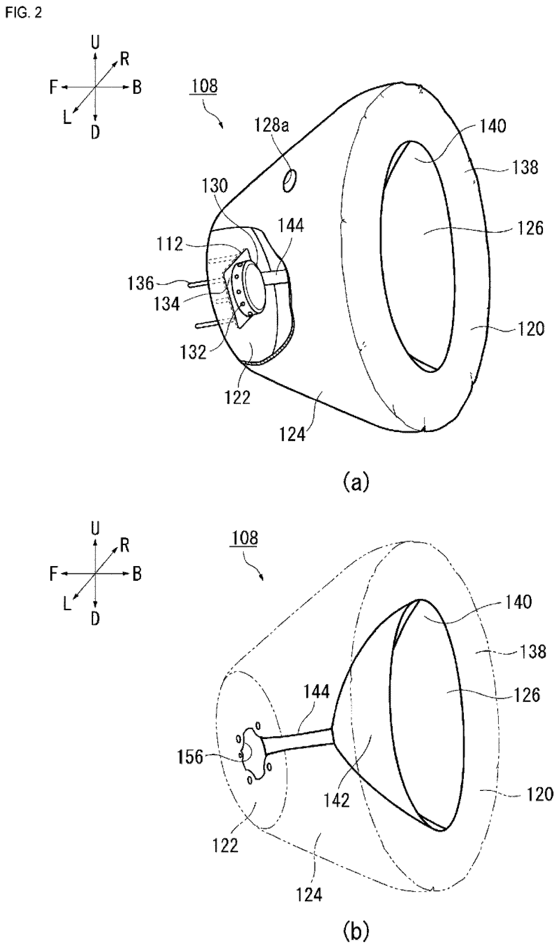

The airbag device 100 is installed in a steering wheel 106, and the driver 166 (see FIG. 5(a), and the like) seated in the driver seat 102 is restrained and protected by an airbag cushion 108 (see FIG. 1(b)) during emergencies, such as an impact to the vehicle, or the like. The airbag cushion 108 is a bag shaped member that can be expanded using gas, that is made compact for stowing by being rolled or folded, and is then stowed together with an inflator 112 (see FIG. 2(a)) in a stowing part 110 in the center of the steering wheel 106.

The stowing part 110 is provided more to the center than a rim 114 of the steering wheel 106 and the surface thereof is covered with a cover 111. The cover 111 is provided with grooved tear line on the inside that is designed to cleave in the event the airbag cushion 108 expands and deploys (see FIG. 1(b)).

FIG. 1(b) is a diagram depicting a state of the airbag device 100 after activation. A cushion 104 expands and deploys in a bag shape towards the driver 166 (see FIG. 5(a)) in the driver seat 102, cleaving the cover 111 (see FIG. 1(a)) using expansion pressure of gas from the inflator 112 (see FIG. 2(a)) and restrains the upper body and head of the driver 166 from moving forward.

The airbag cushion 108 is a round shape from the perspective of the driver seat and expands and deploys in a shape with a recess part 126 formed near the center. The airbag cushion 108 is formed by overlaying and sewing or adhering a plurality of base fabrics forming a surface thereof.

FIG. 2 is a perspective view of an airbag cushion 108 when expanded and deployed in FIG. 1(b). FIG. 2(a) is a diagram depicting the airbag cushion 108 of FIG. 1(b) viewed from slightly above the left side of the vehicle in the width direction. In FIG. 2(a), a portion of the panel configuring the airbag cushion 108 is cut out to expose the internal inflator 112.

The airbag cushion 108 of the present embodiment expands and deploys in a shape that conforms to a truncated cone. The airbag cushion 108 is formed from a plurality of panels and contains a front panel 120 positioned on the driver side, a rear panel 122 positioned on the steering wheel 106 side (see FIG. 1(a)), and a side panel 124 connecting the front panel 120 and the rear panel 122 to form a side portion of the airbag cushion 108. The front panel 120 has a recess part 126 formed at the center. The side panel 124 is also provided with a vent hole 128a for discharging gas.

The inflator 112 is a gas generating device secured to a bottom of the stowing part 110. Upon receiving a detection signal sent from a sensor (not depicted), the inflator 112 is activated, and thereby supplies gas to the airbag cushion 108. The inflator 112 is disc shaped and includes a main body part 130, a gas emitting hole 132 provided on the side surface of the main body part 130, and a flange 134 provided on the outer circumference of the main body part 130.

The inflator 112 is provided with a plurality of stud bolts 136. The stud bolts 136 pass through the rear panel 122 of the airbag cushion 108 and connected to a bottom part of the stowing part 110 of the steering wheel 106 (see FIG. 1(a)). The airbag cushion 108 is also secured inside the stowing part 110 by fastening of the stud bolts 136.

Note that examples of currently prevailing inflators include: types which are filled with a gas generating agent and burn the agent to generate gas; types which are filled with compressed gas and supply gas without generating heat; hybrid types which utilize both combustion gas and compressed gas; and the like. Any of these types can be used for the inflator 112.

FIG. 2(b) is a diagram depicting the recess part 126 through the side panel 124 and the like of FIG. 2(a). The airbag cushion 108 of the present embodiment has a cone shaped recess part 126 at the center of the front panel 120 on the driver side.

The front panel 120 is composed of an outer circular panel 138 and two inner fan-shaped panels 140 and 142 on the left and right. The recess part 126 is formed by an internal tether 144 pulling the fan-shaped panels 140 and 142 toward the rear panel 122. This recess part 126 is used to suppress rotation of a head 168 of the driver 166 (see FIG. 5(a)) when restraining an occupant, as depicted in FIG. 5 below.

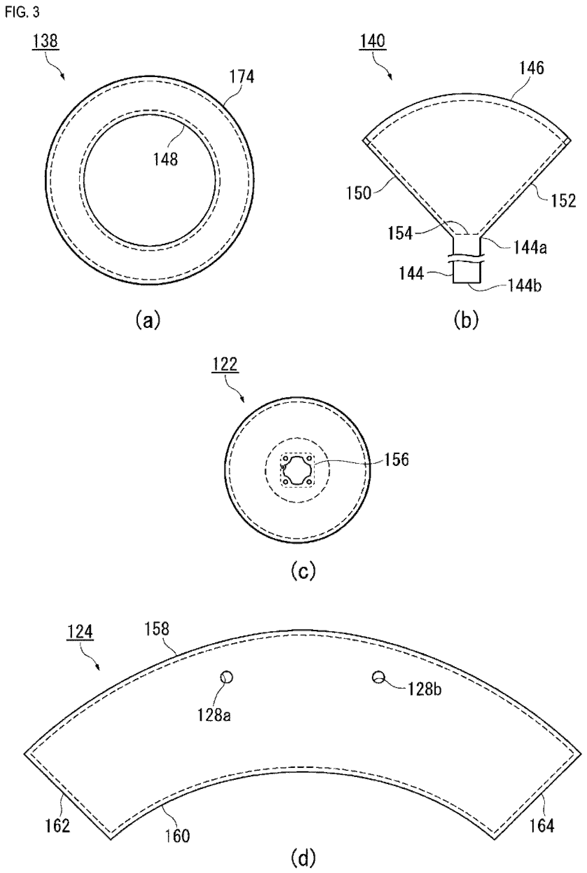

FIG. 3 is a diagram depicting each panel configuring an airbag cushion 108 in FIG. 2(a). In FIG. 3, each panel is depicted in a state spread out on a plane.

FIG. 3(a) is a diagram depicting the circular panel 138 of FIG. 2(a). The circular panel 138 is a circular shaped panel that forms the periphery of the front panel 120. The circular panel 138 forms an occupant restraining surface together with the fan-shaped panels 140 and 142 (see FIG. 2(a)) during expansion and deployment of the airbag cushion 108 to restrain the driver 166.

FIG. 3(b) is a diagram depicting the fan-shaped panel 140 of FIG. 2(b). Since fan-shaped panels 140 and 142 have the same configuration, fan-shaped panel 140 is used as a representative example. The fan-shaped panel 140 is fan-shaped, with arc portion 146 connected to the inner circumferential portion 148 of the circular panel 138, and straight portions 150 and 152 connected to the straight portions of the other fan-shaped panel 142.

In the present Embodiment, two fan-shaped panels 140 and 142 are used to form the cone shaped recess part 126. Note that in other aspects, the cone shaped recess part 126 can be formed with a single fan-shaped panel with a large area or with three or more fan-shaped panels.

The fan-shaped panel 140 is formed with an integral internal tether 144. The internal tether 144 is a strip of material that pulls the fan-shaped panel 140 toward the rear panel 122 inside the airbag cushion 108. The internal tether 144 is overlapped and joined with an internal tether of the other fan-shaped panel 142.

A first end 144a of the internal tether 144 is connected to a center angle 154 of the fan-shaped panel 140, and a second end 144b is connected to the periphery of the securing region 156 (see FIG. 3(c)) of the rear panel 122. With this configuration, the internal tether 144 pulls the center angle 154 portion of the fan-shaped panel 140 toward the rear panel 122, enabling efficient forming of the cone shaped recess part 126.

In other aspects, the second end 144b of the internal tether 144 can be suitably connected to a portion on the vehicle side of the airbag cushion 108 such as the inflator 112, a retainer (not depicted) used when securing the inflator 112, or to the bottom of the stowing part 110 (see FIG. 1(a)).

FIG. 3(c) is a diagram depicting the rear panel 122 of FIG. 2(a). The rear panel 122 is circular and forms a reaction surface that captures reaction forces from the steering wheel 106 (see FIG. 1(a)) when the airbag cushion 108 is expanded and deployed. The airbag cushion 108 expands and deploys in a shape of a truncated cone spreading toward the driver side; therefore, the rear panel 122 has a narrower diameter than the circular panel 138 (see FIG. 3(a)).

The inflator 112 (see FIG. 2(a)) is inserted in the center of the rear panel 122 and the securing region 156 is formed as a region for securing the stowing part 110.

FIG. 3(d) is a diagram depicting the side panel 124 in FIG. 2(a). The side panel 124 has an annular fan-shaped configuration. The side panel 124 is also provided with two vent holes 128a and 128b.

Of the two arcs 158 and 160 of the side panel 124, the large radius side arc 158 is sewn to a peripheral portion 174 of the circular panel 138 that is the edge of the front panel 120, and the small radius arc 160 is sewn to the edge of the rear panel 122. Both ends 162 and 164 of the side panel 124 are sewn together. The annular fan-shaped side panel 124 connects the edge of the rear panel 122 and the edge of the front panel 120 and forms a side part of the airbag cushion 108, suppressing unnecessary swelling and enabling implementation of an airbag cushion 108 with a shape that gradually broadens in diameter towards the driver 166 (see FIG. 5(a)).

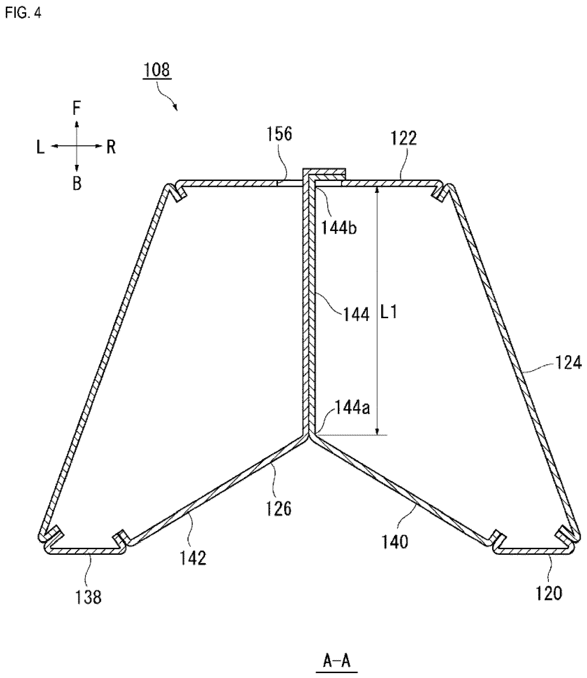

FIG. 4 is a cross-sectional view of the airbag cushion 108 in FIG. 1(b) along A-A. A dimension L1 from the first end 144a of the internal tether 144 to the second end 144b is formed with a dimension to generate tension between the fan-shaped panels 140 and 142 and the rear panel 122 during expansion and deployment of the airbag cushion 108 and pull the fan-shaped panels 140 and 142 toward the rear panel 122. With this configuration, the internal tether 144 pulling the apex toward the rear panel 122 enables forming the cone shaped recess part 126.

The internal tether 144 is not limited to a configuration of being integrally formed with the fan-shaped panel 140 and may be formed as a separate member and then connected to the fan-shaped panel 140 and either configuration enables pulling the fan-shaped panel 140 toward the rear panel 122.

FIG. 5 is a diagram depicting the process of the airbag cushion 108 of FIG. 1(b) restraining the driver 166 in an oblique collision. Each of the diagrams in FIG. 5 correspond to the A-A cross-sectional view of the airbag cushion 108 in FIG. 4(b), depicting the airbag cushion 108 and the driver 166 from above the vehicle.

FIG. 5(a) is a diagram depicting the appearance of the airbag cushion 108 immediately after expansion and deployment. As depicted in FIG. 5(a), when the vehicle is in an oblique collision, the airbag cushion 108 expands and deploys to the front of the driver seat 102 in the vehicle (see FIG. 1(b)).

FIG. 5(b) depicts a state of the driver 166 of FIG. 5(a) moving towards the front of the vehicle. There are cases where the driver 166 moves diagonally to the left in the vehicle width direction from the state of FIG. 5(a) due to inertia during an oblique collision.

FIG. 5(c) depicts a state of the driver 166 of FIG. 5(b) moving further towards the front of the vehicle. The left shoulder of the driver 166 that moved diagonally forward may come into contact with the circular panel 138 and the head 168 may come into contact with the fan-shaped panel 142 of the recess part 126.

The front panel 120 that forms a recess part 126 is able to restrain the head 168 from an oblique frontal angle by means of the fan-shaped panel 142 while suppressing the tension force near the circular panel 138, as compared to a conventional front panel 120 spread in a single flat shape. Therefore, the airbag cushion 108 minimizes rotation 172 of the head 168 with respect to a shoulder 170 of the driver 166 and coinciding with movement of the shoulder 172 [sic], can restrain movement of the head 168.

In this manner, the airbag cushion 108 is able to greatly reduce or eliminate rotation 172 of the head 168 of the driver 166 in an oblique collision in addition to occupant restraint in a normal collision and by reducing angular velocity of the head 168, is able to suppress injury value of the driver 166 associated with rotation 172 of the head 168.

As described above, with the present Embodiment, the internal tether 144 pulls the fan-shaped panels 140 and 142, enabling efficient forming of a cone shaped recess part 126 at the center of the front panel 120. With this recess part 126, rotation 172 of the head 168 can be suppressed compared to restraining the driver 104 with a simple flat surface when the driver 104 moves forward at an angle in an oblique collision. Therefore, with the above-described configuration, it is possible to restrain the driver 104 and suppress injury value.

In addition, with the present embodiment, the recess part 126 is formed with a simple structure using the fan-shaped panels 140 and 142 and the internal tether 144. Therefore, with the present embodiment, the amount of materials used for the panels and the like is low enabling weight reduction and increase in material yield; thereby achieving low cost, and further the airbag cushion 108 can also be folded and stowed in a more compact manner.

Note that with the description with reference to FIG. 5(c) described above, clockwise rotation was used as an example of rotation 172 that occurs with the head 168. However, depending on the conditions of the emergency, the driver 166 may move obliquely to the right in the vehicle width direction and the head 168 may rotate counterclockwise centered on the neck as viewed from above. The airbag cushion 108 of the present embodiment is able to reduce or eliminate rotation of the head 168 using the recess part 126 for this counterclockwise rotation as well and is able to reduce angular velocity of the head 168. In this manner, the airbag cushion 108 of the present embodiment is able to achieve the same effect regardless of which direction in the vehicle width direction the driver 166 moves towards.

### Modified Example

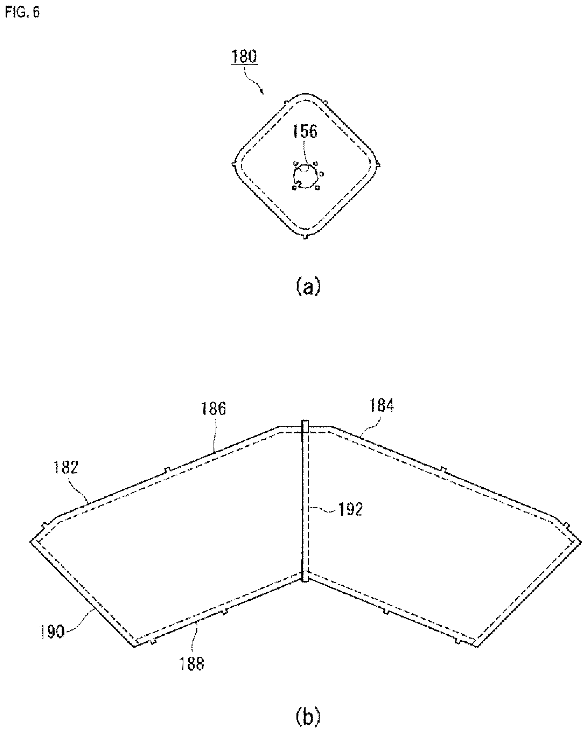

Modified examples of each component of the airbag device 100 described above will be described below. In each of the modified examples illustrated in FIGS. 6 to 9 below, the same components as those already described are omitted from the description by labeling the components with the same symbol. Furthermore, the same names as the components described above shall have the same functions unless otherwise indicated even when labeled with a different symbol.

FIG. 6 is a modified example of the rear panel 122 and the side panel 124 depicted in FIG. 3. FIG. 6(a) is a diagram depicting a rear panel 180 of the modified example. The rear panel 180 is formed in a rectangular shape. The rear panel 180 of this configuration is also able to function as a reaction surface, that is able to receive a reaction force from the steering wheel 106 (see FIG. 1(a)) during an emergency of the airbag cushion 108 (see FIG. 1(b)).

FIG. 6(b) is a diagram depicting modified side panels (sub-panels 182 and 184). The sub-panels 182 and 184 are trapezoidal shaped and when joined together, function as a side panel.

The sub-panel 182 can be sewn to the peripheral portion of the circular panel 138 (see Figure 3(a)) at a long side 186 corresponding to the lower edge of the trapezoid, for example, and to the edge of the rear panel 180 (see FIG.6(a)) at a short side 188 corresponding to the upper edge. Furthermore, connecting the sides 190 and 192 with the sub-panel 184 enables suitably forming the side part of the airbag cushion 108 using a plurality of sub-panels 180 and 184 as well.

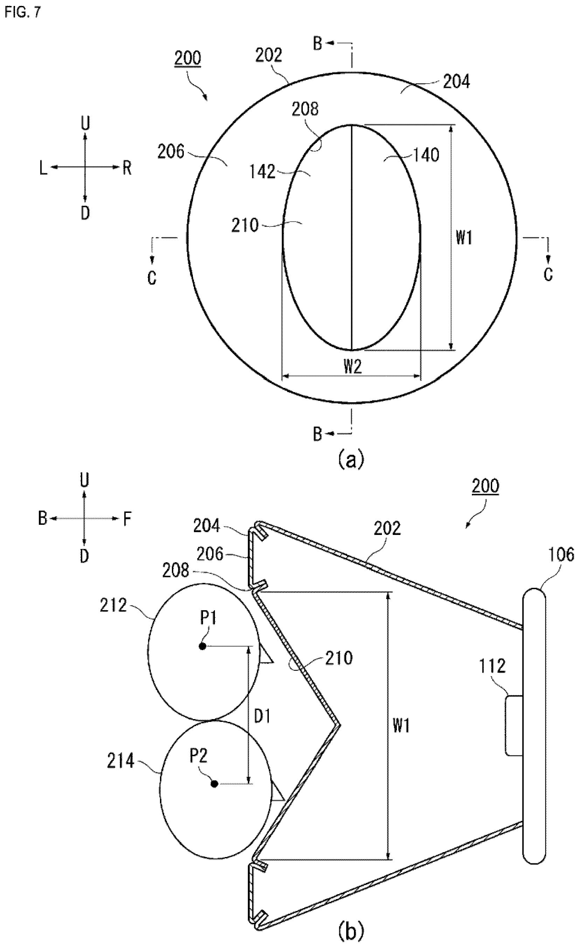

FIG. 7 is a view illustrating a modified example (airbag device 200) of the airbag device 100 of FIG. 1(b). FIG. 7(a) depicts the airbag device 200 as viewed from the driver seat 102 side, corresponding to FIG. 1(b).

A circular panel 206 used by an airbag cushion 202 of the airbag device 200 has a vertical dimension W1 of an inner circumferential portion 208 set larger than a horizontal dimension W2 (W1 > W2). Therefore, a vertical long recess part 210 is formed in the center of a front panel 204 of the airbag cushion 202.

FIG. 7(b) is a cross-sectional view of the airbag cushion 202 in FIG. 7(a) along B-B. FIG. 7(b) depicts two drivers 212 and 214.

The driver 212 is illustrated as including both the Hybrid III (Hybrid III) AM50 and AM95 dummies and the Thor dummy, which are human body dummies for frontal crash testing of automobiles. The AM50 dummy is a human body dummy modeled after an adult U.S. male of average build, 175 cm tall, sitting 88 cm high, and weighing approximately 78 kg. The AM95 dummy is a human body dummy modeled after an adult U.S. male of large build, standing 183 cm tall, sitting 94 cm high, and weighing approximately 101 kg. The Thor dummy is a human body dummy developed as a successor to the Hybrid III dummy, and models only the average body mass male. These human body dummies are based on US National Highway Traffic Safety Administration (NHTSA) standards.

The driver 214 exemplifies AF05 of the Hybrid III dummy described above. AF05 is a human body dummy modeled after a woman of petite build, who is 145 cm tall, sits 79 cm high, and weighs approximately 45 kg.

The vertical dimension W1 of the inner circumferential portion 208 of the airbag cushion 202 in the present Embodiment is set larger than the vertical distance D1 from a head center of gravity P1 of a large adult male driver 212 seated in a normal orientation in the driver's seat 102 (see FIG. 1(b)) to a head center of gravity P2 of a small adult female driver 214 (W1 > D1).

With the airbag cushion 202, the long vertical recess part 210 in the center of the front panel 204 can be used to capture and restrain the heads of various drivers with different body sizes, from the head of a large adult male driver 212 to the head of a small adult female driver 214, within the recess part 210.

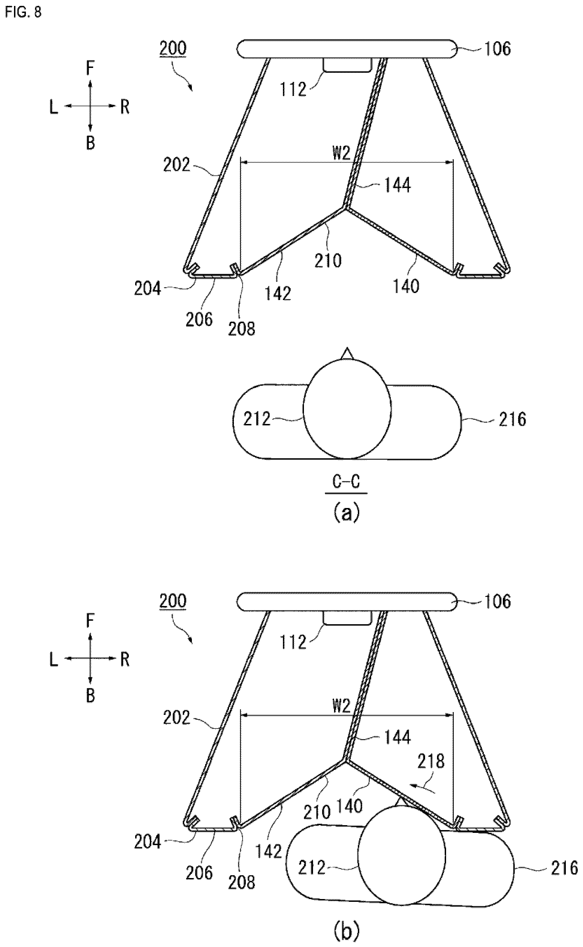

FIG. 8 is a diagram depicting the process of the airbag cushion 202 of FIG. 7(a) restraining the driver 212 in an oblique collision. Each of the diagrams in FIG. 8 correspond to the C-C cross-sectional view of the airbag cushion 202 in FIG. 7(a), depicting the airbag cushion 202 and the driver 212 from above the vehicle.

FIG. 8(a) is a diagram depicting the appearance of the airbag cushion 202 immediately after expansion and deployment. As depicted in FIG. 8(a), when the vehicle is in an oblique collision, the airbag cushion 202 expands and deploys to the front of the driver seat 106 in the vehicle (see FIG. 1(b)).

In the present embodiment, the horizontal dimension W2 of the inner circumferential portion 208 of the circular panel 206 is at least somewhat wider than the head of the driver 212 so that the head of the driver 212 can be restrained by the recess part 210 even when the driver 212 enters diagonally forward.

FIG. 8(b) is a diagram depicting the driver 212 of FIG. 8(a) entering into the airbag cushion 202. The left shoulder 216 of the driver 212 that moved diagonally forward may come into contact with the circular panel 206, and the head may come into contact with the fan-shaped panel 140 of the recess part 210.

The front panel 204 that forms the recess part 210 is able to restrain the head of the driver 212 from an oblique frontal angle by means of the fan-shaped panels 140 and 142 while suppressing the tension force near the circular panel 206, as compared to a conventional front panel spread in a single flat shape. Therefore, the airbag cushion 202 minimizes rotation 218 of the head with respect to a shoulder of the driver 212 and together with movement of the shoulder, can restrain movement of the head.

In this manner, the airbag cushion 202 is able to greatly reduce or eliminate rotation 218 of the head of the driver 212 in a normal collision and in an oblique collision and, by reducing angular velocity of the head, is able to suppress injury value of the driver 212 associated with rotation 218 of the head. With the airbag cushion 202, the long vertical recess part 210 in the center of the front panel 204 can be used to restrain the heads of various drivers with different body sizes, from the head of a large adult male driver 212 to the head of a small adult female driver 214.

With the present Embodiment, the internal tether 144 pulls the fan-shaped panels 140 and 142, enabling efficient forming of a cone shaped recess part 210 at the center of the front panel 204. Therefore, as with the airbag cushion of FIG. 5, the recess part 210 is formed in a concise configuration utilizing the fan-shaped panels 140 and 142 and internal tether 144, enabling lower cost and more compact stowing to be achieved.

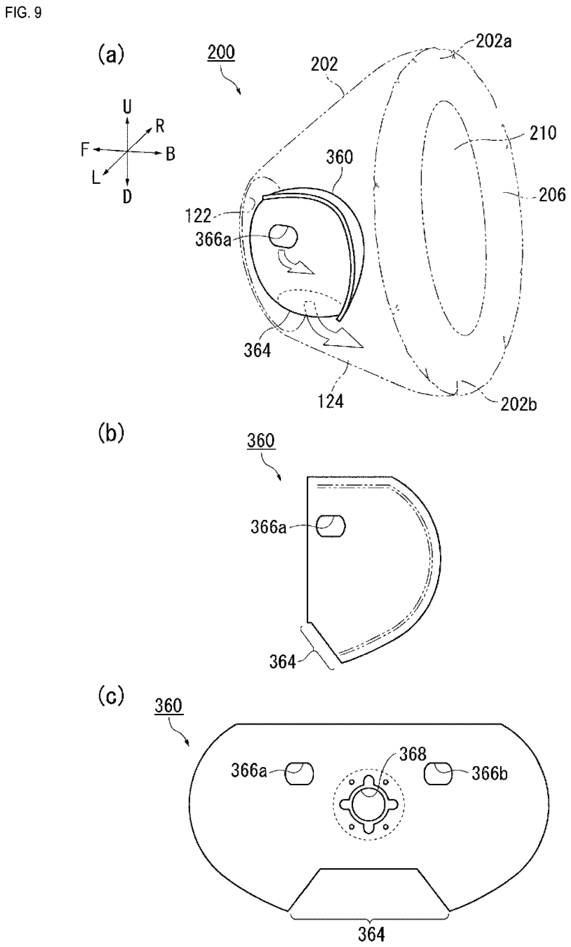

FIG. 9 is a diagram depicting a modified example of the airbag cushion 202 internal structure of FIG. 7(b). FIG. 9(a) depicts the internal structure of the airbag cushion 202 of FIG. 7(b) through each panel. The airbag cushion 202 is provided with a streamlining cloth 360 as a new internal structure.

The streamlining cloth 360 is a member that directs the gas of the inflator 112 (see FIG. 8(a)) in a particular direction, and is connected to the rear panel 122 at the interior of the airbag cushion 202, covering the portion having the gas emitting hole 132 (see FIG. 2(a)) of the inserted inflator 112. The streamlining cloth 360 has an opening part 364 below the inflator 112 that discharges gas, and small diameter exhaust ports 366a and 366b (see FIG. 9(c)) on side parts that also discharge gas.

FIG. 9(b) is a diagram illustrating the streamlining cloth 360 in FIG. 9(a) from the side. The streamlining cloth 360 is formed in a bag shape by stitching, and a lower side edge is open to form an opening part 364.

FIG. 9(c) illustrates a state where the streamlining cloth 360 of FIG. 9(b) is unstitched and spread out on a plane. The streamlining cloth 360 is provided with an insertion opening 368 in the center through which a portion of the inflator 112 (see FIG. 2(a)) is inserted, and is secured to the stowing part 110 (see FIG. 1(a)) together with the rear panel 122 by the stud bolts 136 of the inflator 112.

Exhaust ports 366a and 366b are provided at two locations on left and right sides to supply gas in the vicinity of the center of the airbag cushion. The opening part 364 is formed to a larger diameter than the exhaust ports 366a and 266b and set to enable more gas to pass through than the exhaust ports 366a and 266b.

With the streamlining cloth 360 described above, gas supplied from the inflator 112 (see FIG. 2(a)) is preferentially supplied through the opening part 364 to a lower part 202b of the airbag cushion 202 (FIG. 9(a)) over an upper part 202a. Therefore, the airbag cushion 202 rapidly starts to deploy from the lower part 202b toward the abdomen of the driver.

With the configuration described above, the lower part 202b of the airbag cushion 202 is quickly inserted between the steering wheel 106 (see FIG. 7(b)) and the abdomen of the drivers 212 and 214; thereby starting initial restraint of the drivers 212 and 214 at the abdomen and sandwiching the lower part 202b between the steering wheel 106 and abdomen and stabilizing the overall orientation.

In particular, adult female drivers 214 (see FIG. 7(b)) of small stature often move the driver's seat 102 closer to the front than usual and drive closer to the steering wheel 106. Even in this case, the airbag cushion 202 can use the streamlining cloth 360 to expand and deploy the lower part 202b quickly to protect the abdomen of the driver 214 from contacting the rim of the steering wheel 106.

The streamlining cloth 360 can be implemented simultaneously with the internal tether 144 described above. At this time, the internal tether 144 is preferably provided at a position that does not inhibit the flow of gas from the opening part 364 and the exhaust ports 366a and 366b of the streamlining cloth 360.

Preferred embodiments of the present invention were described with reference to the appended drawings, but it goes without saying that the present invention is not limited to such examples. It is clear that a person of ordinary skill in the art could conceive of various modifications or revisions within the scope set forth by the claims, and it would be understood that these modifications or revisions would belong to the technical scope of the present invention.

Moreover, the example in which the airbag device according to the present invention is applied to an automobile has been described in the embodiments described above. However, in addition to automobiles, the present invention can be applied to aircrafts, ships, and the like, with the same operation and effects capable of being achieved.

### INDUSTRIAL APPLICABILITY

The present invention can be used in a vehicle airbag device installed in a vehicle steering wheel.

### EXPLANATION OF CODES

100. Airbag device, 102. Driver seat, 106. Steering wheel, 108. Airbag cushion, 110. Stowing part, 111. Cover, 112. Inflator, 114. Rim, 120. Front panel, 122. Rear panel, 124. Side panel, 126. Recess part, 128a, 128b. Vent hole, 130. Main body part, 132. Gas emitting hole, 134. Flange, 136. Stud bolt, 138. Circular panel, 140, 142. Fan-shaped panel, 144. Internal tether, 144a. First end, 144b. Second end, 146. Arc portion, 148. Inner circumferential portion, 150, 152. Straight portion, 154. Center angle, 156. Securing region, 158. Arc, 160. Arc, 162, 164. Both ends, 166. Driver, 168. Head, 170. Shoulder, 172. Rotation, 174. Peripheral portion, 180. Rear panel, 182, 184. Sub-panel, 186. Long side, 188. Short side, 190, 192. Side, L1. Dimension, 200. Airbag device, 202. Airbag cushion, 202a. Upper part, 202b. Lower part, 204. Front panel, 206. Circular panel, 208. Inner circumferential portion, 210. Recess part, 212, 214. Driver, 216. Right shoulder, 218. Rotation, D1. Distance, P1, P2. Head center of gravity, W1, W2. Dimension, 360. Streamlining cloth, 364. Opening part, 366a, 366b. Exhaust port, 368. Insertion opening.

## Claims

1. A driver seat airbag device, comprising:
an inflator installed in a steering wheel of a vehicle; and
an airbag cushion stowed together with the inflator in the steering wheel that receives gas from the inflator to expand and deploy toward the driver; wherein
the airbag cushion includes:
a rear panel positioned on the steering wheel side,
a front panel positioned on the driver side for restraining the driver, and
a side panel that connects an edge of the rear panel to an edge of the front panel and constitutes a side part of the airbag cushion;
where the front panel includes:
a circular panel in a circular shape, and
one or a plurality of fan-shaped panels that are fan-shaped with an arc portion thereof connecting to an inner circumferential portion of the circular panel, and
the airbag cushion further includes an internal tether inside the airbag cushion that pulls the fan-shaped panel toward the rear panel side.

2. The driver seat airbag device according to claim 1, wherein for the one or a plurality of fan-shaped panels, a plurality are provided and straight portions of the plurality of fan-shaped panels are connected together.

3. The driver seat airbag device according to claim 2, wherein one end of the internal tether is connected to a center angle portion of the one or a plurality of fan-shaped panels.

4. The driver seat airbag device according to claim 3, wherein the internal tether is integrally formed with the fan-shaped panel.

5. The driver seat airbag device according to any one of claims 1 to 4, wherein the side panel is a circular fan shape with a large arc on the front panel side.

6. The driver seat airbag device according to any one of claims 1 to 4, wherein the side panel is a combination of a plurality of sub-panels.

7. The driver seat airbag device according to any one of claims 1 to 4, wherein the dimension of the circular panel inner circumferential portion in the vertical direction is larger than the dimension in the horizontal direction.

8. The driver seat airbag device according to claim 7, wherein the driver includes a large adult male and a small adult female and the dimension of the inner circumferential portion in the vertical direction is at least larger than the distance from the head center of gravity of the large adult male seated in a normal orientation to the head center of gravity of the small adult female.

9. The driver seat airbag device according to claim 7, wherein a portion of the inflator is inserted into the airbag cushion through the rear panel, and a prescribed gas discharge opening is formed in the portion,
the airbag cushion further includes a streamlining cloth connected to the rear panel and covering a portion of the inflator, and the streamlining cloth includes an opening part below a portion of the inflator.
